# NEUE EUROPÄISCHE PATENTSCHRIFT

(11) **EP 0 615 693 B2**
(45) Veröffentlichungstag und Bekanntmachung des Hinweises auf die Entscheidung über den Einspruch: **04.04.2012**
(45) Hinweis auf die Patenterteilung: 25.10.2000
(21) Anmeldenummer: 94103240.1
(22) Anmeldetag: 04.03.1994
(51) Int. Cl.: A23K 1/16

(54) **Tierfuttermittel-Additiv auf Fermentationsbrühe-Basis, Verfahren zu dessen Herstellung und dessen Verwendung**
Animal feed additive based on fermentation broth, process for its production and use
Additif fourrager à base d'un moût de fermentation, procédé pour sa production et son utilisation

(30) Priorität: 17.03.1993 DE 4308498
(43) Veröffentlichungstag der Anmeldung: 21.09.1994
(73) Patentinhaber: Evonik Degussa GmbH, 45128 Essen (DE)
(72) Erfinder: Binder, Wolfram, Dr., D-63517 Rodenbach (DE); Dahm, Franz-Ludwig, D-63577 Alzenau (DE); Hertz, Ulrich, Dr., D-63486 Bruchköbel (DE); Friedrich, Heinz, Dr., D-63457 Hanau (DE); Lotter, Hermann, Dr., D-63674 Altenstadt (DE); Hohn, Wolfgang, D-63584 Gründau (DE); Greissinger, Dieter, Dr., D-61194 Niddatal (DE); Polzer, Wolfgang, D-63584 Gründau (DE)

(56) Entgegenhaltungen:
- EP-A- 0 491 638
- EP-A- 0 533 039
- US- - 5 133 976
- DATABASE WPI Week 9320 Derwent Publications Ltd., London, GB; AN 93-165415 & SU-A-1 735 365 (KIEV POLY) , 23.Mai 1992
- DATABASE WPI Week 7734 Derwent Publications Ltd., London, GB; AN 77-59948Y & JP-A-52 081 259 (ASAHI CHEMICAL IND KK) , 7.Juli 1977

## Beschreibung

Die Erfindung betrifft ein Verfahren zur Herstellung eines neue Tierfuttermittel-Additivs mit hohem Gehalt von Lysin als Fermentationsprodukt.

Tierfuttermittel werden mit einzelnen Aminosäuren entsprechend dem Bedarf der Tiere supplementiert. Zur Supplementierung von Tierfuttermitteln z. B. mit L-Lysin wird bisher welt überwiegend das L-Lysin-Monohydrochlorid mit einem L-Lysingehalt von 78 % eingesetzt. Da das L-Lysin durch Fermentation hergestellt wird, muß es zur Herstellung des Monohydrochlorids zunächst einmal von allen übrigen Bestandteilen der rohen Fermentationsbrühe in aufwendigen Verfahrensschritten abgetrennt, dann in das Monohydrochlorld umgewandelt und letzteres zur Kristallisation gebracht werden. Dabei fallen eine große Anzahl von Nebenprodukten und die zur Aufarbeitung notwendigen Reagenzien als Abfall an. Da eine hohe Reinheit des Tierfuttermitelsupplements nicht immer notwendig ist und zudem In den Nebenprodukten der Fermentation oft noch nutritiv wirksame Wertstoffe enthalten sind, hat es daher in der Vergangenheit nicht an Versuchen gefehlt, die aufwendige Herstellung von Futter-Aminosäuren, insbesondere von reinem L-Lysin-Monohydrochlorid zu vermeiden und die rohe Fermentationsbrühe kostengünstiger in ein festes Tierfuttermittel zu überführen. Alle diese Versuche haben aber zu keinem wirtschaftlich tragbaren Ergebnis geführt

Als gravierender Nachteil hat sich die komplexe Zusammensetzung solcher Medien erwiesen, denn diese sind generell nur schlecht zu trocknen, dann hygroskopisch, praktisch nicht rieselfähig, verklumpungsgefährdet, und für die technisch anspruchsvolle Verarbeitung in Mischfutterwerken nicht geeignet Vor allem Fermentationsprodukte des Lysins sind hier besonders benachteiligt. Die einfache Entwässerung der rohen Formentationsbrühe durch Sprühtrocknung führte zu einem Staubigen stark hygroskopischen und nach kurzer Lagerzelt klumpigen Konzentrat, das in dieser Form nicht als Tierfuttermittel eingesetzt werden kann.

Um zu einem rieselfähigen und lagerungsstabilen Produkt zu gelangen, mußte eine große Menge an den verschiedenartigsten Zuschlagsstoffen in das Konzenträt eingemischt werden. Dadurch wurde aber der in vielen Fällen ohnehin schon relativ geringe Gehalt der Aminosäure noch welter vermindert. Ein solches Produkt wird z. B. In der DE-OS 23 57 119 beschrieben, gemäß der aus der Fermentationsbrühe, ggf. nach Entfernung der Biomasse, ein Konzentrat gefertigt und dieses anschließend mit Hilfsstoffen versetzt wird. Alternativ kann das Lysin aus dem Konzentrat auch durch Ausfällung mit Methanol freigesetzt werden. Auch die DD 139 205, Upr. Mirkobn. Sint., 111 118 (1973), CA 105 (19): 170542g, DE 30 32 618, US 4,327,118 und CS 250 851, beschreiben solche mit Zuschlagsstoffen versetzte fermentativ hergestellte Futtermittel-Additive.

Aus der EP 122 163 und US 5,133,976 ist ein Verfahren bekannt, nach dem bei Einhaltung ganz spezieller Fermentationsbedingungen eine rohe Fermentationsbrühe erhalten werden kann, die sich zu einem festen und stabilen Produkt eintrocknen läßt. Aber auch hier beträgt der Gehalt an L-Lysin nur35 bis 48 Gew.-%. Hieraus ist auch bekannt, daß eine Entwässerung durch azeotrope Destillation mit Paraffinöl zu akzeptablen Produkten führt. Aber auch dieses Verfahren ist aufwendig und kostenintensiv. Analog wurde hierzu auch das toxikologisch bedenkliche Tetrachiormethan verwendet (CS 164 706).

Der Einsatz eines Sprühtrockners mit integrierter Wirbelschicht liefert ein feintelliges und poröses aber rieselfähiges Sprühkorn mit sehr geringer Schüttdichte und immemoch hoher Hygroskopizität. Beim Handling dieses Produktes entsteht eine erthebliche Staubbelastung.

Eine Aufbaugranulation in der Wirbelschicht erwies sich ebenfalls als wenig geeignet, da auch hier Zuschlagsstoffe erforderlich sind, wobei diese in der DD 268 8.65 kontinuierlich zugegeben werden. Dabei ist deren Einsatz insbesondere deswegen essentiell, um aus der Fermentationsbrühe das Wasser zu binden, um so ein Verklumpen des Granulats zu verhindern, was sich insbesondere für die Aufbaugranulation nachteilig auswirken würde.

In der EP-A-0 533 039 werden Aminosäuretierfuttermittelsupplemente, beschrieben, die Aufbaugranulate sind und zu mindestens 40 Gew.-.% Aminosäure enthalten.

In der SU 173 365 A1 (Derwent Publications AN 93-165 415) wird die Herstellung von Lysin-Konzentraten beschrieben, bei dem man in einem ersten Schritt einen Teil der Fermentationsbrühe trocknet. Den verbleibenden Rest der Fermentationsbrühe konzentriert man auf, vermischt ihn 0,5 bis 1,5 Gew.-% Phosphatiden und stellt dann aus diesem Konzentrat und den im ersten Schritt erhaltenen Teilchen in einem Fließbett ein Granulat mit einer Korngröße von 2 bis 4 mm her.

Aufgabe der Erfindung ist daher ein Verfahren zur Herstellung eines Tierfuttermittel-Additivs, das als Wirkstoff Lysin als Fermentationsprodukt in hoher Konzentration bei wenig störenden Nebenprodukten enthält. Das Additiv soll kostengünstig in der Herstellung und als Endprodukt nur wenig hygroskopisch oder klebrig sein und insbesondere eine Schüttdichte von mind. 550 kg/m³ aufweisen. Außerdem soll der Wirkstoffgehalt mit einfachen Mitteln standardisierbar sein. Aufgabe ist außerdem.

Diese Aufgabe wird gemäß der Ansprüche gelöst.

Das erfindungsgemäß hergestellte Tierfuttermittel-Additlv ist auf Fermentationsbrühe-Basis, d. h. es enthält Lysin, das der gewünschte Wirkstoff ist und den überwiegenden Teil der weiteren Inhaltsstoffe (ausgenommen Fermentations-Biomasse) der Fermentationsbrühe, wobei die Fermentations-Biomasse wiederum zu 0 bis 100 % enthalten ist. Das Tierfuttermittel-Additiv kann also gewünschtenfalls in der Biomasse reduziert sein, enthält jedoch den überwiegenden Teil der neben dem Fermentationsprodukt und der Biomasse In der Fermentationsbrühe vorliegenden weiteren Stoffe. Wenn diese weiteren Stoffe durch Aufarbeitungstechniken, wie z. B. Kristallisation, Chromatographie, etc., überwiegend abgetrennt werden, dann bereitet die Granulation des Fermentationsproduktes keine übermäßigen Schwierigkeiten und wird bereits großtechnisch durchgeführt.

Das Tierfuttermittel-Additiv ist erfindungsgemäß ein Aufbaugranulat, d. h., daß es aus einem Feinkorn zu einem Granulat aufgebaut wird. Erfindüngsgemäß hat sich dabei gezeigt, daß die Bildung eines Aufbaugranulats vor allem dann günstig ist, wenn das Fermentationsprodukt zu einem wesentlichen Anteil im Granulat enthalten ist Ab 33 Gew.-% Fermentationsprodukt (dem Lysin) im Aufbaugranulat wird die Bildung eines Aufbaugranulats gegenüber einer sonstigen Granulation, wie z. B. dem azeotropen Abschleppen des Wassers, Zermahlen oder Zerreiben eines ggf. teigigen Kuchens, vorteilhaft Vorzugsweise enthält das Aufbaugranulat mind. 40 Gew.-% und insbesondere mind. 45 Gew.-% Fermentationsprodukt. Die Obergrenze ist üblicherweise bei 90 Gew.-%, bedingt durch die noch enthaltenden weiteren Inhaltsstoffe der Fermentationsbrühe. Diese Inhaltsstoffe sind erfindungsgemäß auch zum Teil erwünscht und erfindungswesentlich, da ein Teil dieser Inhaltsstoffe klebrige Eigenschaften hat und der Bindung des Fermentationsproduktes in dem Aufbaugranulat dient Die Obergrenze von 90 Gew.-% bezieht sich auf das reine Fermentationsprodukt, sofern dieses z. B. versalzt ist, wie im Falle von Lysin, ist die Obergrenze entsprechend dem prozentualen Anteil des Salzes geringer, wobei entsprechend der Anteil der Mineralstoffe steigt.

Erfindungsgemäß hat sich auch gezeigt, daß ein Tierfuttermittel-Additiv, das ein Aufbaugranulat aus mind. 30 Gew.-% Feinkorn ist, wesentlich ist. Das Feinkorn ist dabei ein pulveriges Produkt, von dem mind. 70 Gew.-% eine Partikelgröße < 100 µm hat.

Das Aufbaugranulat kann aus 100 % Feinkorn (alle Angaben beziehen sich wenn nicht anders bezeichnet auf die Trockenmasse), z. B. unter Wasserzusatz aufgebaut werden. Besonders vorteilhaft ist jedoch, wenn das Feinkorn zu höchstens 99 Gew.-% eingesetzt wird und als Bindemittel Fermentationsbrühe zugesetzt ist. Die Fermentationsbrühe kann hierbei direkt, verdünnt, konzentriert oder als aufgelöstes oder suspendertes Trockenprodukt eingesetzt werden. Besonders vorteilhaft ist dabei der Einsatz von aufgelöstem Trockenprodukt, ggf. in oder mit Original-Fermentationsbrühe oder Fermentationsbrühe-Konzentrat. Das aufzulösende Trockenprodukt der Fermentationsbrühe ist hierbei vorteilhaft Über- oder Unterkorn des Tierfuttermittel-Additivs. Ein derart aufgebautes Aufbaugranulat enthält als Basiskorn im Granulat je Granulatpartikel mehrere Körner Feinkorn, dieser Aufbau des Granulats ist gegenüber einer Aufbaugranuletion in der Wirbeischicht, bei der im wesentlichen aus jedem Feinkorn ein Granulatpartikel aufgebaut wird, vorzuziehen, da entgegen allen Erwartungen hierdurch ein Granulat höherer Schüttdichte erhalten werden kann.

Das erfindungsgemäße Aufbaugranulat hat vorteilhaft zu mind. 70 Gew.-% eine Korngröße von mind. 100 µm, üblicherweise liegt der Korngrößenanteil unter 100 µm unter 10 Gew.-% und besonders vorteilhaft unter 3 Gew.-%. Dies läßt sich durch Sieben erreichen, wobei das Unterkorn der Granulation zurückgeführt werden kann. Vorteilhaft liegen 90 Gew.-% des erfindungsgemäßen Aufbaugranulats unterhalb einer Korngröße von 5 mm, bevorzugt unterhalb 2 mm und ganz besonders vorteilhaft nicht größer als 1 mm. Wenn von 1 mm als Obergrenze ausgegangen wird, dann liegen vorzugsweise von dem Aufbaugranulat mind. 75 Gew.-% in diesem Bereich.

Wie schon erwähnt, können die erfindungsgemäß hergestellten Tierfuttermittel-Additive mit Wasser oder Fermentationsbrühe (erhalten wie oben beschrieben) aufgebaut werden, wobei im Falle der Verwendung von Fermentationsbrühe diese wie auch das ganze Produkt die Biomasse im ganzen, in Teilen oder gar nicht enthalten kann. Besonders vorteilhaft ist hierbei wie auch beim ganzen Produkt, wenn die Biomasse überwlegend enthalten ist, vorzugsweise bis 100 % oder nahe 100 %.

Für das Tierfuttermittel-Additiv sind insbesondere solche Fermentationsbrühen als Basis geeignet, die als Fermentationsprodukt als Aminosäure Lysin enthalten. Mit diesen Produkten lassen sich die erfindungsgemäßen Aufbaugranulate besonders gut herstellen.

Wie schon erwähnt, sollen die Tierfuttermittel-Additive gemäß der vorliegenden Erfindung eine möglichst hohe Schüttdichte haben, wobei die erfindungsgemäß hergestellten Produkte, die entweder das Fermentationsprodukt zu mind. 33 Gew.-% enthalten oder aus einem Aufbaugranulat aus mind. 30 Gew.-% Feinkorn mit mind. 70 Gew.-% mit einer Partikelgröße < 100 µm aufgebaut sind oder, besonders vorteilhaft, all diese Merkmale enthalten, vorteilhaft dann hergestellt werden, wenn eine Schüttdichte von mind. 550 kg/m³ erreicht werden soll. Niedrigere Schüttdichten lassen sich auch mit den herkömmlichen Verfahren, wie z. B. der azeotropen Entwässerung mit Paraffinöl oder durch Sprühtrocknung erreichen, wobei letzteres (neben anderen Verfahren) auch zu dem oben erwähnten Feinkorn führt.

Besonders vorteilhaft sind die erfindungsgemäß hergestellten Tierfuttermittel-Additive durch stark scherende Mischwerkzeuge aufgebaut, wobei vorteilhaft die Mischwerkzeuge auf Feinkorn einwirken und, wie oben beschrieben, aus diesem das Granulat aufbauen. Hierbei kommen vorzugsweise wieder die oben erwähnten Bindemittel (Wasser oder Fermentationsbrühe) zum Einsatz. Geeignet ist z. B. die Aufbaugranulation eines Feinkorns in Granulierteilern und insbesondere in Mischem, vorteilhaft Intensiv-Mischern. In solchen stark scherenden Mischern wird das Feinkorn und das Granulat-Schlägen durch die Mischerwand und ggf. vorhandenen Mischschaufeln oder ähnlichem ausgesetzt, die bei dem erfindungsgemäßen Produkt zu einer hohen Dichte, insbesondere mind. 550 kg/m³, meist 550 bis 850 kg/m³ und zu einer hohen Stabilität, d. h. guten Abriebsfestigkeit des Granulats führen. Wie schon erwähnt, ist das Feinkorn vorteilhaft ein sprühgetrocknetes Pulver, das leicht zugänglich ist und zum Aufbau der erfindungsgemäßen Granulate besonders geeignet ist.

Wenn bei der Granulation Wasser oder Fermentationsbrühe zugegeben wird, dann kann die Granulation ggf. unter gleichzeitiger Trocknung durchgeführt werden.

Das erfindungsgemäß hergestellte Tierfuttermittel-Additiv auf Fermentationsbrühe-Basis weist vorzugsweise folgende Zusammensetzung der Trockenmasse auf:

| | | |
|---|---|---|
| freie Supplementaminosäure(n) | | 40 - 90 Gew.-% |
| Proteine | maximal | 0,5 - 20 Gew.-% |
| Carbonsäuren mit weniger als 8 C-Atomen | maximal | 13 Gew.-% |
| Gesamt-Zucker | maximal | 10 Gew.-% |
| Fette und Öle | maximal | 6 Gew.-% |
| Mineralstoffe | maximal | 3-30 Gew.-%. |

Dieses Produkt enthält vorzugsweise alle Inhaltsstoffe der Fermentationsbrühe, ggf. ausgenommen eines Teils der Biomasse bzw. allgemein der mechanisch abtrennbaren Produkte.

Das erfindungsgemäß hergestellte Tierfuttermittel-Additiv enthält vorzugsweise eine der folgenden Komponenten Innerhalb des angegebenen Bereiches:

| | |
|---|---|
| Aminosäure(n) | 40 - 82 Gew.-% |
| Proteine | 10 - 16 Gew.-% |
| Carbonsäuren mit weniger als 8 Atomen | max. 8 Gew.-% |
| Gesamtzucker | 2 - 10 Gew.-% |
| Mineralstoffe | 5 - 25 Gew.-%. |

Üblicherweise enthält das Produkt einen Restwassergehalt von mind. 0,5 Gew.-%, um ein Verklumpen zu vermeiden, sollte der Wassergehalt 5 Gew.-%, maximal jedoch 10 Gew.-% nicht überschreiten.

Der Proteingehalt wird ermittelt aus dem Gesamtstickstoffgehalt minus anorganischem Stickstoffgehalt minus Stickstoffgehalt der freien Aminosäuren und Muliplikation des erhaltenen Wertes mit 6,25 ((Ges. N% - anorg. N% - AS N%) x 6,25). Der Gesamtstickstoffgehalt wird bestimmt durch Aufschluß nach Kjeldahl (Standardverfahren), der anorganische Stickstoffgehalt (Ammonium-Gehalt) z. B. wird bestimmt colorimetrisch, titrimetrisch oder potentiometrisch, der Stickstoffgehalt der freien Aminosäure wird durch die quantitative Bestimmung der freien Aminosäuren (Aminosäureanalysator (ASA)) mit anschließender Berechnung des N-Gehalts ermittelt. Als Mineralstoffe wird die Gesamthelt aller anorganischen Kationen und Anionen bezeichnet.

Der Proteingehalt in den erfindungsgemäß hergestellten Granulaten liegt üblicherweise zwischen 0,5 bis 20 Gew.-%, wobei die Proteine erfindungsgemäß auch zur Erhöhung der Stabilität des Granulats verwendet werden. Deshalb ist ein unterer Bereich von 0,5 Gew.-% anzustreben, besonders günstige Granulate erhält man bei höheren Proteingehalten zwischen 8 und 18 Gew.-% und insbesondere ab Ober 10 Gew.-%.

Üblicherweise enthalten die erfindungsgemäß hergestellten Additive bis zu 20 Gew.-% Fermentations-Biomasse.

Zur Erfindung gehören also solche erfindungsgemäß hergestellten Tierfuttermittel-Additive, die neben Lysin (dem Fermentationsprodukt), noch alle oder doch zumindest den überwiegenden Teil der Inhaltsstoffe der zu dem Fermentationsprodukt gehörigen Fermentationsbrühe enthalten; sowie solche Trerfuttermittel-Additive, die obiger Zusammensetzung genügen, wobei hier die Biomasse vollständig, teilweise oder gar nicht enthalten sein kann.

Durch Sprühtrocknung einer Fermentationsbrühe kann i.d. R. nur ein poröses, feinteiliges Sprühkorn mit einer Schüttdichte unter 550 kg/m³ erreicht werden. Diese Supplemente sind verklumpungsgefährdet und damit für die Verarbeitung in Mischfutterwarken nicht optimal geeignet.

Erfindungsgemäß wurde nun gefunden, daß einerseits durch eine Aufbaugranulation des feintelligen Pulvers wie ausgeführt in Granulierteller oder Mischern, insbesondere unter Verwendung von zusätzlichen stark scherenden Mischwerkzeugen und insbesondere mit einem Konzentrat der Fermentationsbrühe als Bindemittel ein Granulat von gewünschter Korngröße (üblicherweise zwischen 0,1 und 1 mm) und sehr hoher Schüttdichte sowie verminderter Hygroskopizität erhalten werden kann.

Das erfindungsgemäß hergestellte Aufbaugranulat ist 1. d. R. ein kompaktes, annähernd rundes Teilchen, das ausgezeichnete Eignung zum Einsatz in Tierfuttermttteln hat Üblicherweise wird Grobkorn und/oder Feinkorn abgesiebt, so daß das Granulat in einer meist gewünschten Korngröße zwischen 100 und 1 000 µm vorliegt. In dieser Korngröße erfüllt das erfindungsgemäß hergestellte Granulat die verschiedenen Anforderungen zur Verarbeitung In Tierfuttermitteln, z. B. homogene Einmischbarkeit und geringe oder keine Entmischungstendenz. Abgesiebtes Grobkorn kann wie auch abgesiebtes Feinkorn zur Herstellung der Hilfslösung in die Granulation zurückgeführt werden. Das erfindungsgemäße Produkt zeichnet sich insbesondere aus durch
- einen kompakten, rundlichen Teilchenaufbau
- eine reduzierte Hygroskopizität
- eine sehr gute Rieselfähigkeit
- eine reduzierte Verklumpungsneigung
- ein erhöhtes Schüttgewicht
- Staubfreiheit
- hohe mechanische Stabilität
- einen dem Verhältnis in der ursprünglichen Brühe entsprechenden, deshalb maximalen Wirkstoffgehalt
- Fehlen unerwünschter Zuschlagsstoffe
- geringe zusätzlich Kostenbelastung durch Verwendung einfacher Techniken und Erzielung hoher Ausbeuten.

Damit hat das Produkt gegenüber dem Stand der Technik meist folgende Vorteile
- erhöhtes Schüttgewicht, gemessen als Produktmässe eines definierten, locker gefüllten Volumens,
- verringerte Hygroskopizität, gemessen als Wasseraufnahme einer Probe in einer Klimakammer mit Raumtemperatur und 72 % relativer Luftfeuchte nach 60/120 min Verweilzeit,
- praktisch völliges Fehlen von Feinstaub, gemessen als Anteil, der bei mechanischer Siebung ein 10 µm-Netz passiert, und der 3% meist nicht überschreitet.
- kompakter und rundlicher Teilchenaufbau, also weitgehendes Fehlen von Höhlräumen und porösen Strukturen, die die Tellchendichte gegenüber der maximal möglichen, durch die physikochemischen Eigenschaften bestimmten Dichte erniedrigen, sowie das Fehlen scharfer Teilchenkanten,
- sehr gute Rieselfähigkeit, gemessen als die Fähigkeit des Produktes, aus einem zylindrischen Gefäß mit konisch zulaufendem Boden (Innendurchmesser des Zylinder 40 mm, Winkel, zwischen Zylinderwand und Konus 150°, d. h., spitz zulaufend) und einer runden Bodenöffnung von max. 5 mm Durchmesser ohne Stocken auszulaufen.

Vorzugsweise liegt im Additiv überwiegend nur Lysin als Wirkstoff vor.

Ein solches Additiv ist dann universell entsprechend seinem Wirkstoff-Gehalt zu jedem Futter oder zu Prämixen zudosierbar. Bei definierten Futtermischungen kann es aber auch zweckmäßig sein, daß mehrere Komponenten, insbesondere Aminosäuren in dem Additiv in einem bestimmten Verhältnis zueinander vorlieben, so daß mit nur einem Additiv die gewünschte Anreicherung erreicht wird. Das Verhältnis dieser Wirkstoffe kann beispielsweise durch Mischen mehrerer Fermentationsbrühen oder Additive, sowie auch durch Zudosieren vorteilhaft geringer Mengen reiner Wirkstoffe, z. B. Aminosäuren, erhalten werden.

Neben Lysin oder mehreren gezielt enthaltenen bzw. definierten Wirkstoffen im Additiv sollten möglichst wenig weitere undefinierte oder nicht zur Supplementierung geeignete Wirkstoffe im Additiv vorhanden sein.

Bei Aminosäuren sollten die Supplementaminosäuren mindestens 95 Gew.-% der Gesamtmenge der freien Aminosäuren im Supplement ausmachen, vorzugsweise liegt der Gehalt bei mindestens 97 Gew.-%.

Der Gesamtzuckergehalt beinhaltet die von den Mikroorganismen verwertbaren und nicht verwertbaren Zucker, vorteilhaft liegt er bei maximal 8 Gew.-% und Insbesondere bei max. 5 Gew.-%. Üblicherweise wird bei der Fermentation nicht aller Gesamtzucker verbraucht, so daß normalerweise mind. 0,1 Gew.-% im Produkt enthalten sind, I. d. R. sogar mind. 0,5 %. Gerade dieser Gesamtzuckeranteil, der wegen der fehlenden Aufarbeitung der Brühe zum reinen Produkt enthalten ist, führte bei der bisherigen Granulation zu verfahrenstechnischen Problemen, die erfindungsgemäß beseitigt sind.

Der Anteil an Fetten und Ölen wird vorteilhaft auf 3 Gew.-% begrenzt.

Für die Supplementierung sind besonders Supplemente geeignet, die einen Gehalt der gewünschten freien Aminosäure(n) von mindestens 46,5 Gew.-%, besser 49,5, aufweisen, vorzugsweise liegt der Wert bei 50 % oder darüber.
Die obere Grenze liegt vorzugsweise aus prozessökonomischen Gründen bei basischen Aminosäuren bei maximal 60 Gew.-%, bei neutralen Aminosäuren bei 90 Gew.-%.

Die Additive können wie erhalten, In Mischungen solcher Additive (auch der Brühen) oder mit weiteren Zusätzen versehen als Prämixe wie Spurenelement-/Vitamin-Prämixe oder Mineralstoff-Prämixe eingesetzt werden. Solche Additive sind gegenüber der Reinisolation sowie gegenüber bisherigen Produkten aus Fermentationsbrühen preiswerter bei hohem Gehalt, sind leicht standardisierbar und enthalten wenig Nebenprodukte bei geringen Herstellungskosten.

Das erfindungsgemäß hergestellte Tierfuttermittel ist meist ein hellbeiges bis braunbeiges Granulat mit einer Schüttdichte zwischen 550 - 750 kg/m³. L-Lysin liegt in salzartiger Bindung vor, z. B. als Sulfat oder Carbonat Es ist völlig stabil und nach einer Lagerung Ober 12 Monate bei 25°C ist keine Abnahme des Gehaltes an L-Lysin feststellbar. Sein Hygroskopizitätsverhalten ist gut.
Es zeigt eine sehr gute Rieselfähigkeit durch den kompakten, rundlichen Teilchenaufbau, ist weitgehend staubfrei, neigt nicht zur Verklumpung und läßt sich leicht homogen in Vollfuttermittel oder Vormischungen einmischen. Es ist auch als Bestandteil solcher Mischungen von ausgezeichneter Stabilität.
Als Quelle für L-Lysin hat es, bezogen auf gleichen Gehalt an L-Lysin, mindestens die gleiche Wirksamkeit wie das üblicherweise verwendete reine L-Lysin-Hydrochlorid.

Gegenstand der Erfindung ist ein Verfahren zur Herstellung dieser Tierfuttermittel-Additive.

Ein Verfahren zur Herstellung eines Tierfuttermittel-Additives auf Fermentationsbrühe-Basis, das ein Fermentationsprodukt und den überwiegenden Teil der weiteren Inhaltsstoffe der Fermentationsbrühe enthält, wobei die Fermentations-Biomasse zu 0 bis 100 % vorliegt, wird erfindungsgemäß so durchgeführt, daß die Fermentationsbrühe, ggf. nach Entfernung eines Teils der Inhaltsstoffe, zu einem Feinkorn, das zu mind. 70 Gew.-% eine maximale Partikelgröße von 100 µm hat, sprühtrocknet, und daß man dieses Feinkorn zu einem Granulat aufbaut, das zu mind. 30 Gew.-% das Feinkorn enthält.

Vorteilhaft wird das Granulat zu mind. 70 Gew.-% zu einer Korngröße ≥ 100 µm aufgebaut Ein solches Granulat ist staubarm und kann stabil in Futtermittel eingearbeitet werden. Erfindungsgemäß erfüllen meist > 90 Gew.-% und oft sogar > 97 Gew.-% dieses Kriterium.

Der Aufbau des Granulats erfolgt aus dem Feinkorn durch Zugabe von Wasser oder Fermentationsbrühe, die ggf. nur einen Teil der Inhaltsstoffe enthält, d. h. z. B. in der Biomasse reduziert ist. Die Fermentationsbrühe wird vorteilhaft wie oben beschrieben eingesetzt.

Das Granulat wird mit einer Schüttdichte von mind. 550 kg/m³ aufgebaut, wobei einerseits Volumen eingespart und andererseits ein sehr stabiles Produkt erhalten wird. Zum Aufbau des Granulats aus Feinkorn ist außerdem der Einsatz stark scherender Mischwerkzeuge geeignet, die mit dem Feinkorn und dem sich bildenden Granulat zusammenprallen und letztere innig miteinander verpressen, so daß ebenfalls ein sehr stabiles Granulat mit hoher Schüttdichte erhalten wird.

Für die Herstellung des Feinkorns wird eine Fermentationsbrühe ggf. teilweise oder vollständig um die Biomasse reduziert, z. B. durch mechanische Trenntechniken und die Fermentationsbrühe auf 30-60 Gew.-% Trockenmasse konzentriert Dieses Konzentrat wird z. B. über einen Fallfilmverdarnpfer zu einem feintelligen Pulver getrocknet, das üblicherweise eine Schüttdichte von 350 bis unter 550 kg/m³ und einen Wassergehalt von < 5 Gew.-% hat.

Für die erfindungsgemäße Granulation können noch weitere übliche Zuschlagsstoffe, wie z. B. Perlite, eingesetzt werden, solange die erfindungsgemäßen Merkmale erhalten bleiben. Vorzugsweise sind solche Zuschlagsstoffe auf unter 10 Gew.-% im Endprodukt beschränkt, insbesondere liegen sie bei max. 5 Gew.-%. Erfindungsgemäß können solche Zuschlagsstoffe auch unter 1 % eingesetzt bzw. ganz weggelassen werden.

Die verwendeten Fermentationsbrühen haben üblicherweise ein Feststoff-Gehalt von 7,5 bis 26 Gew.-% und enthalten Lysin zu 1 bis 20 Gew.-%. Besonders vorteilhaft sind solche Fermentationsverfahren, bei denen Lysin zu mind. 40 Gew.-% in der Trockenmasse nach Beendigung der Fermentation vorliegt. Vorteilhaft ist außerdem auch, wenn die Fermentation zumindest am Ende, vorteilhaft jedoch Ober mind. 30 % der Fermentationsdauer zuckerlimitiert gefahren wird, d. h., daß die Konzentration an verwertbaren Zucker im Fermentationsmedium auf max. 0,3 Gew.-% gehalten bzw. abgesenkt wird.

Hergestellt werden die Fermentationsbrühen für Aminosäuresupplemente vorteilhaft derart, daß man einen Lysin produzierenden Mikroorganismus in einem Fermentationsmedium kultiviert, das mindestens eine Kohlenstoffquelle, mindestens eine Stickstoffquelle, Mineralsalze und Spurenstoffe enthält, wobei man die Fermentation so führt, daß an ihrem Ende eine rohe Fermentationsbrühe mit einem Gehalt an verwertbarem Zucker von max. 4 g/l und insbesondere mit einem Feststoffgehalt von 7,5 - 26 Gew.-%, einem Aminosäuregehalt von 1 - 20 Gew.-%, vorteilhaft von 4 bis 10,5 Gew.-% und einem Zuckergehalt von maximal 2,6 Gew.-% erhalten wird.

Unter Verwendung geeigneter Mikroorganismen wird die Fermentation vorteilhaft so kultiviert, daß die Trokkenmasse der Fermentationsbrühe max. 15 Gew.-% an Protein und insbesondere mindestens 40 Gew.-% an Aminosäuren, max. 8 Gew.-% an Carbonsäuren mit weniger als 8 C-Atomen, max. 10 Gew-°% an Gesamtzucker, max. 5 Gew.-% an Fetten und Ölen und max. 5 - 30 Gew.-% an Mineralstoffen enthält.
Gegen Ende der Fermentation wird der Gehalt an verwertbarem Zucker auf maximal 1 g/l eingestellt, d. h. es wird kein Zucker zugegeben und die Fermentation erst bei Erreichen oder Unterschreiten dieses Wertes abgebrochen.

Um den Aminosäuregehalt in der Trockenmasse zu erhöhen, oder um die Trockenmasse auf einen bestimmten Gehalt an Aminosäure zu standardisieren; oder um den Proteingehalt der Trockenmasse zu erniedrigen, kann die Biomasse ggf. andere Stoffe durch mechanische Trenntechniken und unter Belassen der überwiegenden Anteile der restlichen Komponenten der Fermentationsbrühe vorzugsweise nach Ende der Fermentation entfernt werden.

Wenn keine Biomasse abgetrennt werden soll, ist die Fermentation vorteilhaft so zu führen, daß möglichst wenig Biomasse produziert wird, wobei die zugegebenen Nährstoffe am Ende möglichst weitgehend verbrauch sein sollen. Eine solche Fermentation ist z. B. in der DE-A 41 30 867, Beispiel 3, beschrieben.

Vorteilhafterweise wird die Fermentation so geführt, daß über mindestens 30 %, vorzugsweise über 70 % der Fermentationsdauer die Konzentration an verwertbarem Zucker in der Fermentationsbrühe höchstens 0,3 Gew.-% beträgt.

Als Aminosäure produzierende Mikroorganismen wurden für Lysin bevorzugt geeignete Mutanten der Species Corynebacterium oder Brevibacterium verwendet, z. B. der bei der Deutschen Stammsammlung für Mikroorganismen unter DSM 5715 hinterlegte und erhältliche Stamm.

Als Kohlenstoffquelle werden vorzugsweise Stärkehydrolysate (Glucose) oder Saccharose eingesetzt. Ein geringer Anteil kann auch aus Zuckerrüben-oder Zuckerrohrmelasse stammen.
Dieser Anteil sollte 5 Gew.-% der Gesarntkohlenstoffquelle nicht überschreiten (= 10 Gew.-% Melasse in der Gesamtkohlenstoffquelle).

Als Stickstoffquelle dienen neben Ammoniak oder Ammoniumsulfat Hydrolysate von Protein enthaltenden Stoffen wie Maiskleber, Sojamehl oder der Biomasse aus einem vorhergehenden Ansatz oder beispielsweise Maisquellwasser oder Fischpepton.

Die Fermentationstemperatur liegt zweckmäßigerweise zwischen 30 und 40°C, der pH-Wert des Fermentationsmediums zwischen 6,0 und 8,0. Die Dauer der Fermentation beträgt im allgemeinen maximal 100 Stunden.

Nach dem Ende der Fermentation können die Mikroorganismen thermisch oder auch durch andere Verfahren, z. B. durch Zusatz einer Mineralsäure wie Schwefelsäure, abgetötet werden.

Anschließend wird ggf. die Biomasse (tellweise) nach bekannten Verfahren, wie Separieren, Dekantieren, einer Kombination von Separieren und Dekantieren, Ultrafiltration oder Mikrofiltration, abgetrennt

Die Fermentationsbrühe wird dann durch bekannte Verfahren, z. B. in einem Dünnschicht-oder Fallfilverdampfer zu einem Vorkonzentrat mit einem Feststoffgehalt von 30 bis 60 Gew.-% eingedickt.

Zum endgütligen Eintrocknen des Vorkonzentrats zu einem feinteiligen Pulver mit einer Schüttdichte von 350 bis < 550 kg/m³ und einem Wassergehalt von < 5 Gew.-% kann beispielsweise ein Sprühtrockner, ein Spin-flash-Trockner oder ein Wirbeischichttrockner dienen.

Anschließend wird das feinteilige Pulver vorteilhaft unter Zuhilfenahme von Wasser, insbesondere aber konzentrierter Fermentationsbrühe, oder einer wässrigen Lösung von Überkorn oder Feinstaub in einem Granulierteller oder Mischer in Gegenwart oder Abwesenheit weiterer Trägerstoffe zu einem Granulat geeigneter Korngröße mit einer Schüttdichte von 550 - 850 kg/m³ verarbeitet.

Die Fermentationsbrühe hat als Bindemittel vorteilhaft einen Feststoffgehalt von 40 - 65 Gew.-%, insbesondere 50 - 60 Gew.-%. Lysin-Fermentationen lassen sich damit besonders gut granulieren.

Sofern eine Standardisierung des erfindungsgemäß hergestellten Tierfuttermittels bezüglich des Gehalts der Aminosäure erwünscht ist, kann dies beispielsweise durch entsprechende Wahl der Menge an verbleibender Biomasse und/oder geeignetes Abmischen der Vorkonzentrate oder des getrockneten Pulvers erfolgen. Entsprechend können auch biomassefreie oder -reduzierte Brühen mit Originalbrühen zur Standardisierung gemischt werden. Eine andere Möglichkeit ist der Zusatz geringer Mengen an futtermittelrechtlich unbedenklichen Zuschlagsstoffen, wie Weizenkleie, Maisspindelmehl oder Perlite.

Die erfindungsgemäß hergestellten Tierfuttermittel-Additive, Produkt wie Verfahrensprodukt, finden Verwendung zu Supplementierung oder Herstellung eines Tierfuttermittels oder Prämixes für Tierfuttermittel; zur Erfindung gehört somit auch ein Tierfuttermittel oder Prämix, das einen Gehalt an einem erfindungsgemäß hergestellten Tierfuttermittel-Additiv gemäß der vorliegenden Erfindung enthält.

Die nachfolgenden Beispiele sollen die Erfindung näher erläutern:

### Beispiel 1:

In einem Fermentationsbehälter mit Rührwerk und Belüftungssystem wurden 150 kg einer sterilen Lösung folgender Zusammensetzung vorgelegt:

| | |
|---|---|
| Wasser | 132,0 kg |
| Melasse | 0,8 kg |
| Saccharose | 3,7 kg |
| Maiskleberhydrolysat, schwefelsauer | 9,2 kg |
| Ammoniumsulfat | 1,5 kg |
| Mineralsalze | |
| Spurenstoffe | 0,4 kg |
| mit einer Ammoniaklösung auf einen pH-Wert von 7,5 eingestellt | |

Dieser Lösung wurden bei 33 bis 35°C 15 I einer im gleichen Fermentationsmedium, aber in einem separaten Fermentationsbehälter angezogenen Impfkultur eines Corynebacteriums zugesetzt.

Innerhalb von 42 h wurden 78 I einer sterilen Lösung zudosiert, die vor der Neutralisation auf pH 7,5 folgende Zusammensetzung hatte:

| | |
|---|---|
| Wasser | 37,0 kg |
| Melasse | 2,5 kg |
| Saccharose | 43,0 kg |
| Maiskleberhydrolysat, schwefelsauer | 8,2 kg |
| Ammoniumsulfat | 0,9 kg |
| Mineralsalze | |
| Spurenstoffe | 0,2 kg |

Während der gesamten Fermentationsperiode wurde der pH-Wert mittelt Ammoniaklösung zwischen 7,0 und 7,5 gehalten.
Die Rührerdrehzahl wurde auf 600 Upm und die Belüftungsrate auf 0,5 bis 0,7 wm eingestellt.

Am Ende der Fermentationsperiode wurden 252 kg einer rohen Fermentationsbrühe mit einem Feststoffgehalt von 31,2 kg, einem Gehalt an L-Lysinbase von 13,7 kg und einem Gehalt an Zucker von 0,6 kg erhalten.

Die Mikroorganismen wurden thermisch abgetötet und die Fermentationsbrühe in einem Fallfilmverdampfer unter vermindertem Druck auf einen Feststoffgehalt von etwa 52 Gew.-% eingedickt.

Anschließend wurde dieses Vorkonzentrat in einem Sprühtrockner mit integriertem Wirbelbett zu einem hellbraun-beigem Pulver mit einem Schüttgewicht von 0,5 kg/l und mit folgender Zusammensetzung entwässert:

| | |
|---|---|
| L-Lysinbase | 44,7 Gew.-% |
| andere α-Aminosäuren | 1,2 Gew.-% |
| Proteine | 14,5 Gew.-% |
| Carbonsäuren mit weniger als 8 C-Atomen | 5,2 Gew.-% |
| Zucker | 1,9 Gew.-% |
| Fette und Öle | 3,5 Gew.-% |
| Mineralstoffe | 20,2 Gew.-% |
| Wasser | 4,1 Gew.-% |

Grundsätzlich kann statt dem wie oben beschrieben erhaltenen Produkt jedes auf konventionelle Weise erhaltene Feinkorn, z. B. erhalten aus einer Lysin-Fermentationsbrühe durch Sprühtrocknung eingesetzt werden.

In einen EIRICH-intensivmischer Typ R 02 mit 10 I Innenvolumen, ausgerüstet mit einen Sternwirbler (5000 Upm), werden 2,5 kg dieses Feinkorns vorgelegt und mit 550 ml einer Aufschlämmung des gleichen Feinkorns in Wasser versetzt, wobei der Gehalt der Aufschlämmung 55 % w/w beträgt. Nach 5 min wird die Granulatbildung beendet und das Produkt im Umluft-Trockenschrank getrocknet.

| Technische Daten: | | Ausgangsprodukt Granulat | |
|---|---|---|---|
| | | | |
| Wasseraufnahme (72 % rel. | | | |
| Feuchte) nach 60/120 | min [%]: | 1,24/2,59 | 0,81/1,75 |
| | | verklebt | rieselnd |
| Schüttgewicht | [kg/m³]: | 500 | 700 |
| Siebanalyse | [%] < 100 µm: | 82 | 1 |
| | > 1000 µm: | 0 | 8 |
| Rieselfähigkeit* | : | 6 | 2 |
| (*: 1 = ausgezeichnet, 2 = sehr gut, 6 = nicht rieselfähig) | | | |
| Ausbeute an Granulat nach Siebung 100 - 1000 µm: >90 % | | | |

### Beispiel 2:

In einem Fermantationsbehälter mit Rührwerk und Belüftungssystem wurden 150 kg einer sterilen Lösung folgender Zusammensetzung vorgelegt:

| | |
|---|---|
| Wasser | 130 1 |
| Glucose | 12.4 kg |
| Maiskleberhydrolysat, schwefelsaurer | 9.0 kg |
| Ammoniumsulfat | 1,5 kg |
| Mineralsalze | } 0.4 kg |
| Spurenstoffe | |
| mit einer Ammoniaklösung auf einen pH-Wert von 7,5 eingestellt. | |

Dieser Lösung wurden bei 33 bis 35°C 12 I einer im gleichen Fermentationsmedium, aber in einem separaten Fermentationsbehälter angezogenen Impfkultur eines Corynebacteriums zugesetzt

Innerhalb von 40 h wurden 77 I einer sterilen Lösung zudosiert, die vor der Neutralisation auf pH 7,5 folgende Zusammensetzung hatte:

| | |
|---|---|
| Wasser | 38 1 |
| Glucose | 40,0 kg |
| Waiskleberhydrolysat, schwefelsaurer | 8;3 kg |
| Ammoniumsulfat | 0,9 kg |
| Entschäumer (Nalco®) | 0.08 kg |
| Mineralsalze | } 0,2 kg |
| Spurenstoffe. | |

Während der gesamten Fermentationsperiode wurde der pH-Wert mittels Ammoniaklösung zwischen 7,0 und 7,5 gehalten. Die Rührerdrehzahl wurde auf 600 Upm und die Belüftungsrate auf 0,5 bis 0,7 vvm eingestellt

Am Ende der Fermentationsperiode wurden 275 kg einer rohen Fermentationsbrühe mit einem Feststoffgehalt von 34,1 kg, einem Gehalt an L-Lysinbase von 15,5 kg und einem Gehalt an Zucker von 0,71 kg erhalten. Die Mikroorganismen wurden thermisch abgetötet und mit einer Kombination von Separator und Dekanter abgetrennt

Die von der Biomasse befreite Brühe wurde in einem Fällfilmverdampfer unter vermindertem Druck auf einen Feststoffgehalt von etwa 52 Gew.-% eingedickt.

Anschließend wurde dieses Vorkonzentrat in einem Sprühtrockner zu einem helibraun-beigem Pulver mit einem Schüttgewicht von 0,51 kg/l und mit folgender Zusammensetzung entwässert

| | |
|---|---|
| L-Lysinbase | 52,1 Gew.-% |
| andere α-Aminosäuren | 2,5 Gew.-% |
| Proteine | 8,8 Gew.-% |
| Carbonsäuren mit weniger als 8 C-Atomen | 6,8 Gew.-% |
| Zucker | 2,4 Gew.-% |
| Fette und Öle | 2,5 Gew.-% |
| Mineralstoffe | 21,1 Gew.-% |
| Wasser | 1,6 Gew.-% |

Die Granulation des feinteiligen Pulvers erfolgt wie in Beispiel 1 in einem Mischer mit stark scherenden Mischwerkzeugen unter Verwendung des Vorkonzentrats als Bindemittel und lieferte ein staubfreies Produkt mit einer Körnung von mehr als 80 % unterhalb 1 mm und einer Schüttdichte von 0,65 kg/l.

### Beispiel 3:

Die Fermentation wurde durchgeführt wie im Beispiel 2 mit dem Unterschied, daß anstelle des reinen schwefelsauren Maiskleberhydrolysats ein Gemisch aus 3,5 kg schwefelsaurem Maiskleberhydrolysat und 13,8 kg schwefelsaurem Hydrolysat der im Beispiel 2 abgetrennten Biomasse eingesetzt wurde.

Am Ende der Fermentationsperiode wurden 272 kg einer rohen Fermentationsbrühe mit einem Feststoffgehaft von 36,2 kg, einem Gehalt an L-Lysinbase von 17,1 kg und einem Gehalt an Zucker von 0,55 kg erhalten.

Die Biomasse wurde ohne Vorbehandlung durch Ultrafiltration (≤ 300 000 Dalton) abgetrennt. Die von der Biomasse befreite Brühe wurde wie im Beispiel 2 auf einen Feststoffgehalt von etwa 53 Gew.-% eingedickt.

Anschließend wurde ein Teil dieses Vorkonzentrats in einem Wirbelschichttrockner zu einem heilbraun-beigem Pulver mit einem Schüttgewicht von 0,53 kg/l und mit folgender Zusammensetzung entwässert:

| | |
|---|---|
| L-Lysinbase | 62,1 Gew.-% |
| andere α-Aminosäuren | 1,2 Gew.-% |
| Proteine | 2,6 Gew.-% |
| Carbonsäuren mit weniger als 8 C-Atomen | 3,1 Gew.-% |
| Zucker | 2,0 Gew.-% |
| Fette und Öle | 1,7 Gew.-% |
| Mineralstoffe | 24,4 Gew.-% |
| Wasser | 1,6 Gew.-%. |

Ein weiterer Teil des Vorkonzentrats wurde vor der Entwässerung im Wirbelschichttrockner mit soviel Maisspindelmehl versetzt, daß das erhaltene Festprodukt einen standardisierten Gehalt an L-Lysinbase von 60 Gew.-% hatte.

## Patentansprüche

1. Verfahren zur Herstellung eines Tierfuttermittel-Additivs auf Fermentationsbrühe-Basis, enthaltend Lysin als. Fermentationsprodukt und den überwiegenden Teil der weiteren Inhaltsstoffe der Fermentationsbrühe, wobei die Fermentations-Biomasse zu 0 bis 100 % enthalten ist, **dadurch gekennzeichnet, dass** man
(a) einen Lysin produzierenden Mikroorganismus der Gattung *Corynebacterium* oder *Brevibacterium* in Gegenwart von Ammoniumsulfat unter Gewinnung einer Fermentationsbrühe kultiviert;
(b) die Fermentationsbrühe, ggf. nach Entfernung eines Teils der Inhaltsstoffe, zu einem Vorkonzentrat mit einem Feststoffgehalt von 30-60 Gew.-% eindickt;
(c) das Vorkonzentrat sprühtrocknet unter Gewinnung eines Feinkorns mit
(c1) einer Schüttdichte von 350 bis <550 kg/m³,
(c2) einem Wassergehalt <5 Gew.-%,
(c3) einem Anteil von mindestens 70 Gew.-% mit einer Partikelgröße von <100 µm;
(d) das Feinkorn unter Zuhilfenahme von Wasser aufbaut unter Gewinnung des Tierfuttermittel-Additivs als Aufbaugranulat mit
(d1) einer erhöhten Schüttdichte von mindestens 550 kg/m³, und
(d2) einem Gehalt von mindestens 30 Gew.-% des Feinkorns.

2. Verfahren nach Anspruch 1, **dadurch gekennzeichnet, dass** das Granulat aus dem Feinkorn durch Zugabe von Wasser oder Fermentationsbrühe, die ggf. nur einen Teil der inhaltsstoffe enthält, aufgebaut wird.

3. Verfahren nach einem der Ansprüche 1 oder 2, **dadurch gekennzeichnet, dass** das Feinkorn mit stark scherenden Mischwerkzeugen zu dem Granulat aufgebaut wird.

## Claims

1. Process for the production of an animal feed additive based on fermentation broth and containing lysine as fermentation product and the majority of the other ingredients of the fermentation broth, wherein 0 to 100% of the fermentation biomass is present, **characterised in that**,
(a) a lysine-producing microorganism of the genus *Cornyebacterium* or *Brevibacterium* is cultured in the presence of ammonium sulfate to give rise to a fermentation broth;
(b) the fermentation broth, optionally after removal a proportion of the ingredients, is thickened to form a preconcentrate with a solids content of 30 to 60 wt.%;
(c) the preconcentrate is spray dried to form fine particles with
(c1) a bulk density of 350 to <550 kg/m³,
(c2) a water content of <5 wt.%,
(c3) a proportion of at least 70 wt.% having a particle size of <100 µm;
(d) the fine particles are agglomerated with the assistance of water to obtain the animal feed additive as agglomerated pellets with
(d1) an elevated bulk density of at least 550 kg/m³ and
(d2) a content of at least 30 wt.% of the fine particles.

2. Process according to claim 1, **characterised in that** the pellets are agglomerated from the fine particles by addition of water or fermentation broth, which broth optionally contains only a proportion of the ingredients.

3. Process according to either one of claims 1 or 2, **characterised in that** the fine particles are agglomerated to form the pellets with high-shear mixing tools.

## Revendications

1. Procédé de préparation d'un additif fourrager à base d'un moût de fermentation, contenant comme produits de fermentation de la lysine et l'essentiel des autres constituants du moût de fermentation, la biomasse de fermentation étant contenue dans une proportion entre 0 et 100 %, **caractérisé en ce que**
(a) l'on cultive un microorganisme produisant de la lysine du genre Corynebacterium ou Brevibacterium en présence de sulfate d'ammonium pour obtenir un moût de fermentation ;
(b) l'on concentre le moût de fermentation, le cas échéant après élimination d'une partie des constituants, pour réaliser un produit pré-concentré avec une teneur en solides de 30 à 60 % en poids ;
(c) l'on sèche le produit pré-concentré par pulvérisation pour obtenir un grain fin avec
(c1) une densité apparente de 350 à <550 kg/m³,
(c2) une teneur en eau <5 % en poids,
(c3) une part d'au moins 70 % en poids de particules d'une taille de <100 µm ;
(d) l'on agglomère le grain fin à l'aide d'eau pour obtenir l'additif fourrager comme granulat aggloméré avec (d1) une densité apparente accrue, d'au moins 550 kg/m³, et (d2) une teneur en le grain fin d'au moins 30 % en poids.

2. Procédé selon la revendication 1, **caractérisé en ce que** le granulat est synthétisé à partir des grains fins par addition d'eau ou de moût de fermentation, qui ne contient le cas échéant qu'une partie des constituants.

3. Procédé selon une quelconque des revendications 1 ou 2, **caractérisé en ce que** les grains fins sont transformés en granulat à l'aide d'outils de mélange exerçant un effort de cisaillement important.
